Europäisches Patentamt

European Patent Office

Office européen des brevets

(11) Publication number: **0 265 974**
A1

(12) **EUROPEAN PATENT APPLICATION**

(21) Application number: **87200167.2**

(22) Date of filing: **03.02.87**

(51) Int. Cl.⁴: **B 08 B 3/02,** B 60 S 3/00

(30) Priority: **26.09.86 IT 2183986**

(43) Date of publication of application: **04.05.88**
**Bulletin 88/18**

(84) Designated Contracting States: **CH DE FR LI**

(71) Applicant: **GORLA APPALTI S.p.A., Piazza IV Novembre N.4, I-20124 Milano (IT)**

(72) Inventor: **Gorla, Giovanni, Via Fratelli Cervi Residenza Sassi, I-20090 Segrate MI (IT)**

(74) Representative: **Arena, Giovanni, Viale Certosa 135, I-20151 Milano (IT)**

(54) **Mobile apparatus for cleaning and washing surfaces by means of a jet of hot water delivered under pressure.**

(57) The apparatus consists of a washing unit, of a blower unit for delivery of hot air for drying purposes and of a generating set. The washing unit emits a jet of hot water at high pressure and high temperature which can quickly be changed, by means of a control mounted on the delivery nozzle, into a jet of water mixed with detergent emitted at a lower level of pressure and at a lower temperature.

EP 0 265 974 A1

## "MOBILE APPARATUS FOR CLEANING AND WASHING SURFACES BY MEANS OF A JET OF HOT WATER DELIVERED UNDER PRESSURE"

Subject of the present invention is a mobile apparatus for washing surfaces with a jet of hot water delivered under pressure, particularly applicable to spaces and surfaces which especially require cleaning and disinfecting such as, for example, sanitary fittings and the vestibules of railway carriages.

For surface washing of objects or enclosed spaces there is already available trolley-mounted cleaning equipment which, through a nozzle worked by an operator, delivers a jet of hot water whose pressure and temperature can be regulated, and into which chemical additives can be put for more efficient cleaning and disinfecting. Such equipment, however, is unsuitable for cleaning work where frequent and rapid changes in its operating conditions are needed as, whenever such changes (of temperature, pressure, water mixture) become necessary, this must be done by the operator on the trolley, a process both time-wasting and inconvenient. Further, with such equipment delivery from the nozzle cannot be reduced below a certain limit as, to do so, would turn off the boiler provided for heating the water.

The purpose of the present invention is to overcome the above drawbacks and, in particular, to realize a mobile washing apparatus offering a high degree of safety and reliability, whose operating conditions can be quickly and easily altered by means of controls placed on the handgrip of the nozzle. The apparatus can also rapidly dry out the washed surface by means of hot air blown over it under pressure from a system which ensures a high heat efficiency.

For these purposes the mobile apparatus, according to the invention, includes:

- a boiler for quickly heating the water;
- a pump for delivering hot water under pressure;
- a nozzle for directing the jet;
- a thermostat for regulating water temperature;
- a pressure-regulating device;
- a box containing the additives to mix into the water;

and is characterized in that:

- a control (12) is mounted on the nozzle for switching water flow from it, either above or below a previously set value;
- a first and second thermostat are mounted in the nozzle's feed circuit, these being set at two levels of temperature, t1 and t2 respectively, as well as one or more devices sensitive to variations in pressure or in delivery caused by the above control (12), which devices, according to whether water flow has switched below or above said previously set value, turn the first thermostat off and the second thermostat on or, respectively, the first thermostat on and the second thermostat off, and also permit flow and mixing of the prepared additive in the water feed pipe or respectively stop said flow.

Further original solutions relative to preferred embodiments of the invention are indicated below in the claims. Characteristics of the invention will be made even clearer from the description which follows and from the attached drawings showing examples of its realization of a non-limitative nature, where the various figures show:

Fig. 1: a diagrammatic representation of the chief parts into which the apparatus is divided;

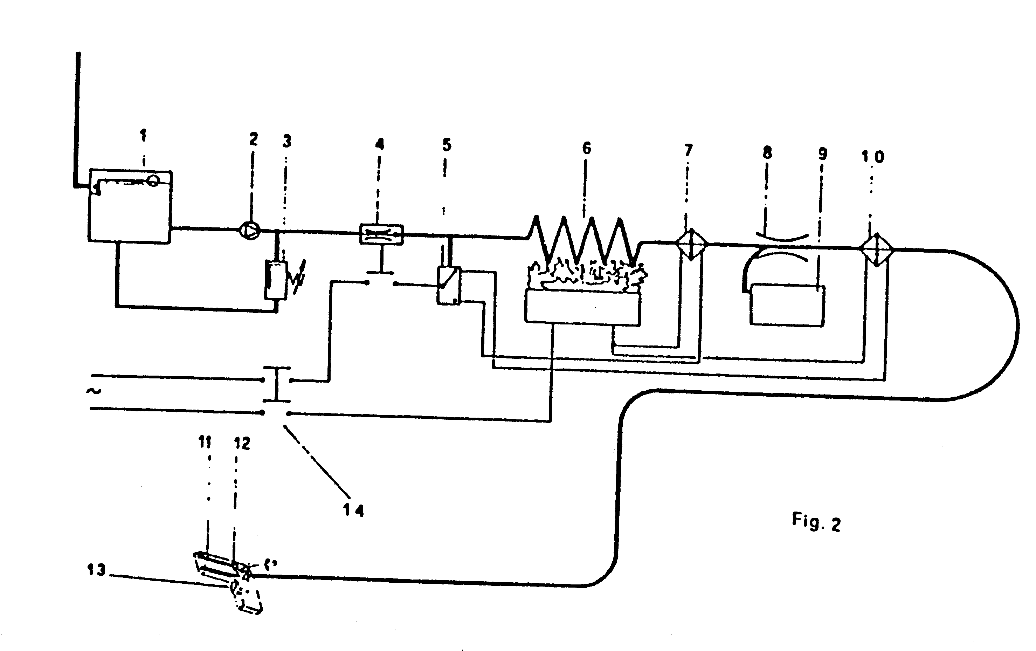

Fig. 2: a diagram of the most important parts constituting the washing unit in Fig. 1;
Fig. 3: an example of realization of the devices for modifying delivery from the nozzle and for controlling entry of the chemicals into the washing water and their exclusion from it.

Fig. 4: an example of construction of the nozzle in the blowing unit;

Fig. 5: an example of realization of the heating system for the air blown out;

Fig. 6: an example of how the metal casing of the appa ratus is electrically grounded.

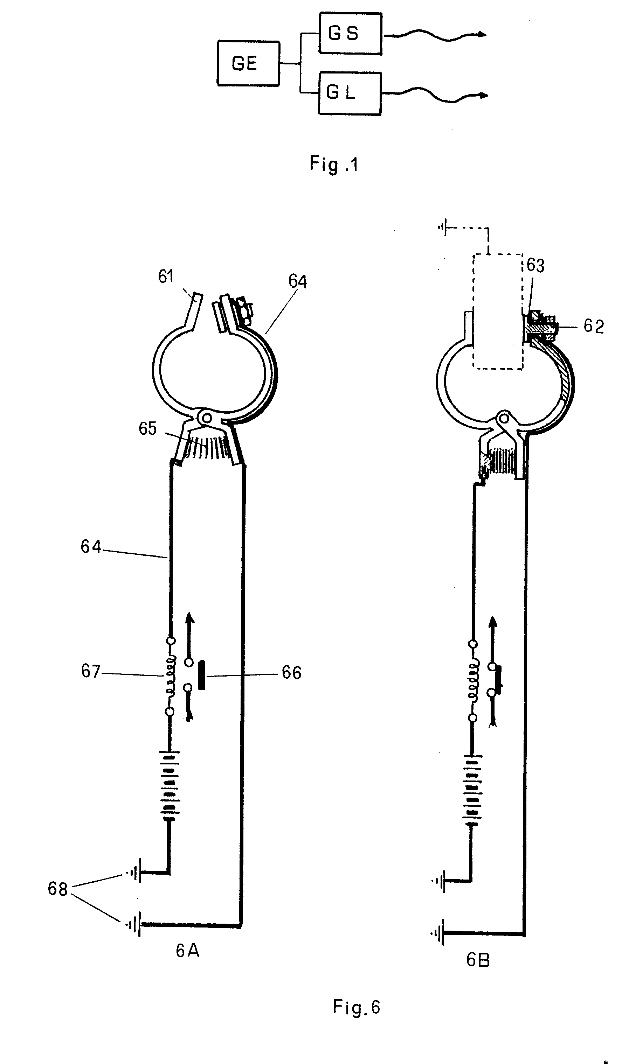

As diagrammatically shown in Fig.1, the apparatus can be divided into the following main parts: a generating set GE to provide elecricity for operating the various units of the machine, a washing unit GL which delivers hot water under pressure, and a blowing unit GS which delivers hot air under pressure for drying the washed surfaces, the whole being mounted on a trolley and protected by an outer metal casing.

Fif.2 shows the following parts:

1: Tank for washing water; 2: Pump (of the type with controls regulating the delivery head it produces); 3: Maximum pressure valve; 4: Flow-sensitive detector; 5: Pressure-sensitive detector; 6: Boiler; 7 and 10: Thermostats; 8: Venturi tube; 9: Box for the prepared additive (detergent); 11: Nozzle for delivery of washing water; 12: Delivery commutator; 13: Flow on-off switch; 14: Main electric on-off switch.

The tank 1 is countinuously fed from the outside and its level is kept constant by an automatic float valve.

If there is no flow of washing water (delivery nozzle 11 turned off) the pump remains in action recycling the circulating water in the tank 1 by means of a by-pass assured by the valve 3; at the same time the flow-sensitive detector 4 de-energises the circuit which allows the boiler burner 6 to function. As soon as the nozzle is turned on, the water, thrust by the pump 2, starts to circulate towards the nozzle.

This circulation is detected by flow-sensitive detector 4, which then lights up the boiler.

The nozzle 11 has two orifices and a control 12 which can change the degree of orifice opening from having both orifices open or only one open so that delivery can be switched from a lower value p1 to a higher value p2.

The pressure detector 5 is set at a level of pressure intermediate between those of the two previously mentioned deliveries. Therefore, according to whether the switch 12 controls delivery from one or both orifices, the pressure detector will activate one or other of the two thermostats 7 and 10. More precisely, it will activate thermostat 7 if only one orifice is open, and will activate thermostat 10 if both orifices are open.

The Venturi tube 8 is fitted with a valve which only opens the duct communicating with the tank 9 when the pressure inside the tube falls below a value intermediate between the pressure values which occur in said tube in the two different conditions of delivery. As, with only one orifice open, water speed inside the Venturi tube is lower and pressure therefore higher, it follows that water unmixed with detergent will correspond to p1 delivery while, at p2 delivery, the valve leading into the Venturi tube will open so that detergent (present in 9) will be sucked up and mixed into the washing water.

As thermostat 7 is set at a temperature (e.g. 60° C) higher than that of thermostat 10 (e.g. 40° C), it will occur that, at p1 delivery, there be a jet of plain water leaving the nozzle at high pressure and a high temperature, while at p2 delivery, the jet of water and detergent will leave the nozzle at a low level of pressure and a lower temperature.

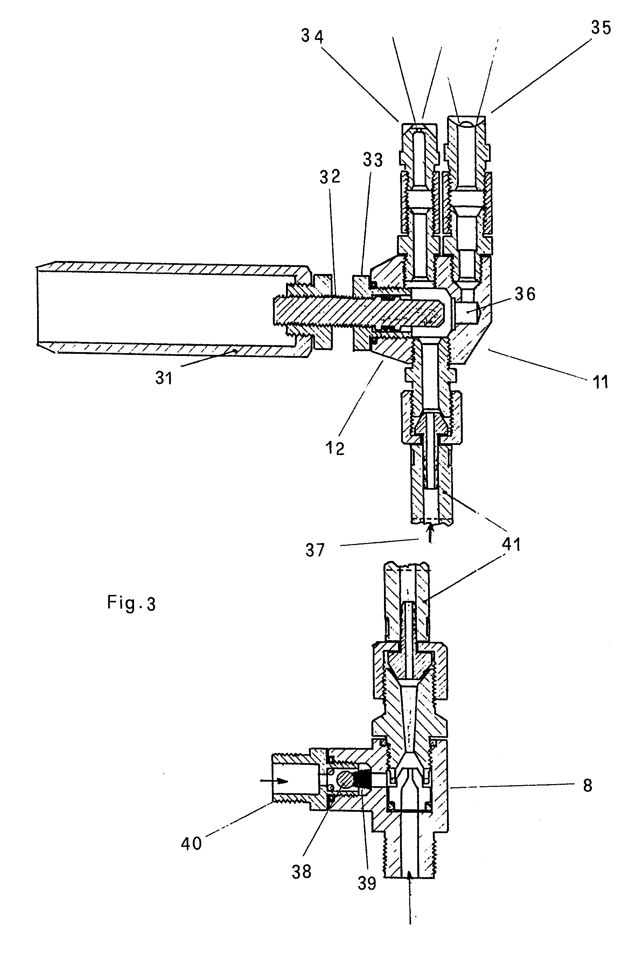

Fig.3 shows a cross section view of an example of realization of the Venturi tube 8 and of the switch 12 mounted on the nozzle 11.

The drawings of the nozzle and of the Venturi tube show how the same parts are made from threaded components coupled together (in the drawings the extremities of the rubber connecting tube are indicated by the number 41). This screw coupling is fixed for all the components, except for that between the pin 32 and ring nut 33 which are likely to make reciprocal rotating movements. The figure shows that the handgrip 31, which serves to control commutation of flow delivery, is unscrewed down to the lower end of the travel of pin 32, and therefore the washing water (with detergent) arriving from 37 can flow outwards through the two orifices 34 and 35.

When the operator wants to have a jet of plain washing water without detergent (at higher pressure and higher temperature), he screws up the handgrip 31 until the right-hand end of the pin 32 meets, and thus closes, the opening to the cylindrical cavity 36. This causes orifice 35 to close and delivery to be altered to the value p1.

The drawing of the Venturi tube 8 shows that, on the mouth of the detergent suction tube 40, there is a one-way valve which comprises the sphere 38 and spring 39 which tends to push the sphere to the left. Calibration of the spring is such that, at delivery p1, the spring prevails over the suction force inside the Venturi tube therefore pushing the sphere 38 against the mouth of the tube 40 and blocking it.

When however delivery becomes P2, the suction force prevails over the spring and the mouth of the tube 40 therefore remains open allowing the detergent to enter and become mixed with the washing water.

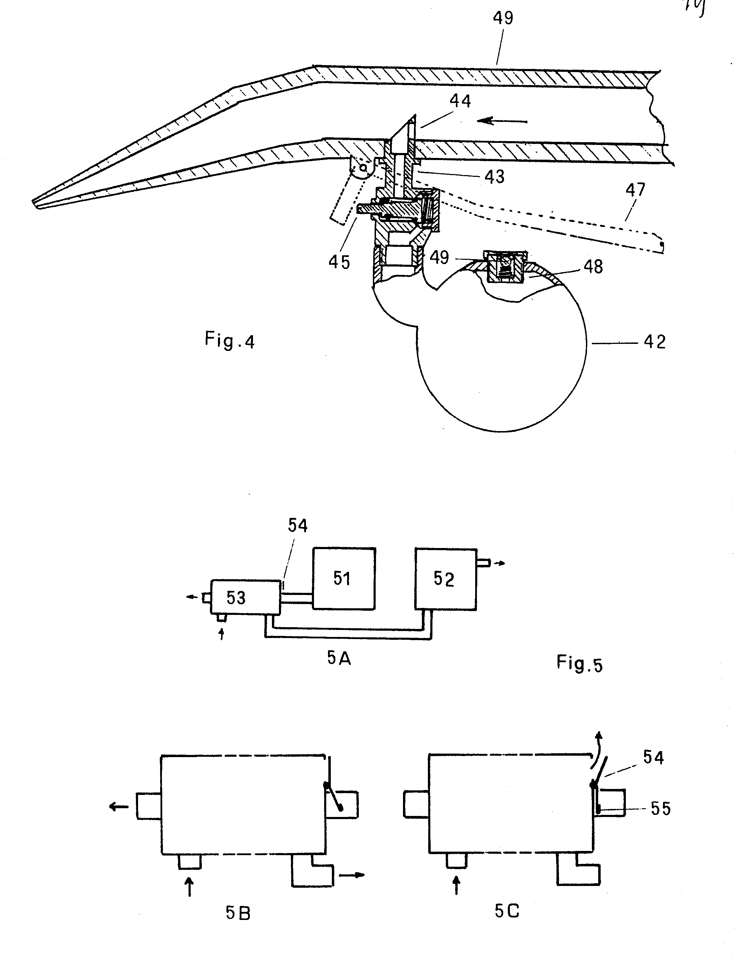

Fig.4 shows the nozzle 49 for blowing out hot air under pressure and the tank 42 of deodorant liquid with which it is provided. It appears from said figure that the tank 42 is connected to the inside of the nozzle by a tube 43 whose upper end 44 partly penetrates inside the inner duct of the nozzle assuming a shape such as to enhance

00265974

the sucking effect created by the flow of air.

In the tube 43 there is a stop valve whose slider 45 is able to make axial movements within a cylindrical chamber, such movements being provoked by the left-hand end of the lever 47 and by a spring placed on the right at the bottom of said cylindrical cavity. When not in use said spring pushes the slider 45 to the left causing said slider to obstruct the passage of the liquid from the tank 42 to the nozzle. Under working conditions however, the lever 47, being gripped together with the nozzle, holds the slider 45 at its dead end on the right and consequently keeps the valve open.

Therefore, when operating, the liquid present in 42 becomes sucked up and mixes with the hot air leaving the nozzle. This suction is made possible by the presence of the valve 48. When idle, the valve 48 is in fact closed because the sphere 49 is pressed against the upper aperture by a spring underneath. But under working conditions suction of the liquid into the nozzle causes pressure to fall inside the tank and when this goes below a certain value, it prevails on the above mentioned spring thus allowing the sphere to move downwards and air to enter the tank from the outside.

Fig.5 gives a diagrammatic rapresentation of how the air blowing unit GS in Fig. 1 functions. In accordance with this the air for blowing is heated twice, once as an effect of the compression to which it is subjected inside a centrifugal blower 52, and again when the sucked air passes from the environment into a heat exchanger 53 placed round the exhaust pipe of the motor 51 which works the generating set (see 5A in the drawing). The heat exchanger is fitted with a valve 54 which causes air from the environment to enter the exchanger and keeps the exhaust pipe cool even when the blower unit is not in use.

As may be more clearly seen in the part 5C of the drawing, the valve 54 consist of a plate bent in the shape of a V and hinged along the bend line to the lower side of a rectangular opening present in the exchanger. On the lower side of said plate there is a counterweight 55 which ensures that the valve will be open when the blower unit is turned off (centrifugal blower 52 turned off). When the centrifugal blower is working, however, (part 5B of the drawing), the depression it sets up inside the exchanger 53 prevails over the action of the counterweight 55 and makes the valve close thus allowing the exchanger to function properly.

An example of how the metal casing of the machine is electrically grounded is given in Fig.6.
This figure represents the varius parts as follows:
61: pincers gripping the external ground clamp; 62: contact electrode; 63: bushing for insulating the electrode 62 from the metal pincers; 64: insulated leads; 65: spring; 66: remote control contact on the starting circuit of the generating set; 67: remote control excitation coil; 68: metal casing of the machine.
It may be deduced from this figure that when the pincers are in contact with the external ground clamp (part 6B in the drawing), the coil 67 working the remote control device is energized allowing current to reach the starting circuit of the generating set. Should the ground clamp princers (part 6A in the drawing) accidentally become detached, the circuit previously closed through the leads fixed to the pincers, opens automatically causing the remote control device to be de-energized and the generating set to cease functioning.

It is clear that many modifications, adaptions, variants and replacement of parts with others having an equivalent function can be made to the examples of realization previously described for explanatory though not limitative purposes, without however departing from the sphere of protection established by the following claims.

# CLAIMS

1. Mobile apparatus for cleaning and washing surfaces by means of a jet of hot water delivered under pressure, comprising:
- a boiler for quickly heating the water,
- a pump for delivering hot water under pressure,
- a nozzle for directing the jet;
- a thermostat for regulating water temperature,
- a pressure-regulating device;
- a box containing the additives to mix into the water, characterized in that:
- a control (12) is mounted on the nozzle for switching water flow from it, either above or below a previously set value V;
- a first and second thermostat are mounted in the nozzle's feed circuit, these being set at two levels of temperature, t1 and t2 respectively, as well as one or more devices (5-8) sensitive to variations in pressure or in delivery caused by the above control (12), which devices, according to whether water flow has switched below or above said previously set value, turn the first thermostat off and the second thermostat on or, respectively, the first thermostat on and the second thermostat off, and also permit flow and mixing of the prepared additive in the water feed pipe or respectively stop said flow.

2. Mobile apparatus as in claim 1, characterized in that the device from among the aforesaid (5-8) which controls mixing of the additive product, consists of a Venturi tube mounted in the water feed pipe, the sucking nozzle of which is connected to the additive preparation container through a valve so made to allow the preparation to pass out since the level of low pressure existing in the Venturi tube is lower than the value corresponding to the above delivery V.

3. Mobile apparatus as in claim 1 or 2 characterized in that the nozzle is provided with two orifices and commutation of jet delivery is made by respectively operating the closure and aperture of one of the two orifices.

4. Mobile apparatus as in one of the previous claims in which a generating set is present for providing electric current to the various components, and a blower unit for drying the washed surfaces by means of a blast of hot air emitted under pressure, characterized in that the air circulating in the pipe of the blower unit is preheated by its passage in a heat exchanger placed round the exhaust pipe of the combustion engine working the generating set.

5. Mobile apparatus as in claim 4 characterized in that the heat exchanger comprises a valve made to allow circulation of air from the environment inside the exchanger when the blower unit is turned off, said valve automatically closing when the aforesaid blower unit begins operating due to the effect of the depression created inside the exchange on account of said unit becoming active.

6. Mobile apparatus as in claim 4 characterized in that:
- on the handgrip of the nozzle giving out hot air there is a tank (42) for containing deodorant liquid;
- said tank (42) communicates with the nozzle pipe through a tube (43) whose extremity, from the nozzle end, partially penetrates inside the nozzle pipe and is so shaped as to enhance the sucking effect produced by the flow of air in the nozzle;
- on the surface of the tank (42) there is a depression valve made to allow air to enter the tank from outside when the low pressure inside is lower than a given value;
- the tube (43) is fitted with a cut-off valve which is opened and kept open merely by grasping the handgrip of the nozzle, while it automatically closes when the nozzle is laid down.

7. Mobile apparatus as in claim 1 whose metal casing can be connected to an external ground clamp through a lead, characterized in that:
- the lead (64) is a two-wire lead;
- the pincer connecting the lead (64) to the ground clamp, when not in operation, ensures electric insulation of the two wires one from the other, while under operating conditions, ensures their connection;
- at the end opposite the pincer, the two wires of the lead (64) are joined respectively to the metal casing and to an energizing circuit of an automatic switch, present on the starting circuit of the generator set, in such a way as to turn said set off automatically should the pincer become accidentally detached from the ground clamp.

GE — GS →

GL →

Fig .1

61    64

63

62

65

64

67    66

68

6A    6B

Fig.6

Fig. 2

Fig.3

00265974

4/4

49

44

43

47

45

49

48

42

**Fig.4**

54

53

51

52

5A

**Fig.5**

54

55

5B

5C

European Patent
Office

**EUROPEAN SEARCH REPORT**

00265974

Application Number

EP  87 20 0167

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| A | WO-A-8 200 783 (OBERDORFER) <br> * page 7, lines 4-14 * <br> --- | 1,2,6 | B 08 B     3/02 <br> B 60 S     3/00 |
| A | DE-A-2 920 006 (HAAS) <br> * page 4, lines 14-26 * <br> --- | 1 | |
| A | US-A-3 685 535 (CABLE et al.) <br> * column 5, lines 32-52 * <br> --- | 1,2,4 | |
| A | US-A-2 635 010 (SANDERS et al.) <br> * column 5, lines 11-24 * <br> --- | 1,2 | |
| A | FR-A-1 054 765 (OMAC) <br> * whole document * <br> --- | 4,6 | |
| A | DE-A-3 148 898 (SUTTNER) <br> * figures * <br> --- | 3 | |
| A | US-A-3 730 193 (ARMISTEAD) <br> * column 3, lines 26-38 * <br> ----- | 7 | |

TECHNICAL FIELDS
SEARCHED (Int. Cl.4)

B 60 S     3/00
B 08 B     3/00
B 08 B     5/00
B 08 B     6/00
B 08 B     13/00

The present search report has been drawn up for all claims

| Place of search | Date of completion of the search | Examiner |
|---|---|---|
| BERLIN | 14-12-1987 | STANDRING M A |

EPO FORM 1503 03.82 (P0401)